# EUROPEAN PATENT APPLICATION

(11) **EP 2 723 005 A1**
(43) Date of publication of application: **23.04.2014**
(21) Application number: 13185870.6
(22) Date of filing: 25.09.2013
(51) Int. Cl.: H04B 11/00

(54) **Electronic apparatus and control method thereof**

(30) Priority: 17.10.2012 KR 20120115524
(71) Applicant: Samsung Electronics Co., Ltd, Gyeonggi-do 443-742 (KR)
(72) Inventor: Shim, Seung-seop, Gyeonggi-do (KR)
(74) Representative: Brandon, Paul Laurence

(57) **Abstract**

An electronic apparatus includes a communication unit that communicates with an external device according to a predetermined communication specification, such as Bluetooth or WiFi; a sound processor that generates an acoustic sound to establish a connection with the external device when a predetermined event occurs; a speaker that outputs the acoustic sound; and a controller that controls the communication unit to automatically establish a connection with the external device according to the predetermined communication specification when a response signal is received from the external device that received the acoustic sound output from the speaker.

## Description

### CROSS-REFERENCE TO RELATED APPLICATIONS

This application claims priority from Korean Patent Application No. 2012-0115524 filed October 17, 2012 in the Korean Intellectual Property Office, the disclosure of which is incorporated herein in its entirety by reference.

### BACKGROUND

### 1. Field

Methods and apparatuses consistent with exemplary embodiments relate to an electronic apparatus and a control method thereof, and more particularly, to an electronic apparatus that performs communication with an external device and a control method for performing communication with an external device.

### 2. Description of the Related Art

In conjunction with the general development of electronic devices, various types of display apparatuses have been developed. Particularly, display apparatuses, such as televisions (TVs), personal computers (PCs), laptop computers, tablet PCs, cell phones, MP3 players, etc., are widely used in most common households.

Recently, in order to meet user's needs for a variety of new functions, display apparatuses support a variety of services provided through a plurality of machine-to-machine communications.

Accordingly, a variety of ways to perform a various machine-to-machine communications have been developed. Generally, a display apparatus provides menus through a display screen. For example, in order to connect a display apparatus via WiFi or Bluetooth the display apparatus has a display unit, and a user inputs necessary information, such as a personal identification number (PIN) value, etc., using a menu provided on the display screen, thereby achieving the machine-to-machine connections.

However, since the provided menu may include professional terminology related to machine-to-machine communications according to each of communication specifications, it may be difficult for a user to understand the professional terminology and to manage the machine-to-machine communication.

### SUMMARY

Exemplary embodiments may overcome the above drawbacks and other problems associated with the conventional arrangement and an exemplary embodiment provides an electronic apparatus that communicates with an external device by using an acoustic sound.

According to an aspect of an exemplary embodiment, there is provided an electronic apparatus including: a communication unit which is configured to communicate with an external device according to a predetermined communication specification; a sound processor which is configured to generate an acoustic sound to connect the electronic apparatus with the external device when a predetermined event occurs; a speaker which is configured to output the acoustic sound; and a controller which is configured to control the communication unit to automatically connect the electronic apparatus with the external device according to the predetermined communication specification when a response signal is received from the external device that received the acoustic sound output from the speaker.

The predetermined event may include an event that a power of the electronic apparatus is turned on.

The sound processor may be configured to generate the acoustic sound including information required to connect the electronic apparatus with the external device according to the predetermined communication specification.

The predetermined communication specification may include at least one of a WiFi specification and a Bluetooth specification.

If the predetermined communication specification is the WiFi specification, the information required to connect the electronic apparatus with the external device may include at least one of channel information, access point (AP) information, WiFi-direct information, and a password. If the predetermined communication specification is the Bluetooth specification, the information required to connect the electronic apparatus with the external device may include at least one of address information, pin information, and key information.

The acoustic sound may include a sound of an audible frequency band or a sub-audible frequency band.

According to an aspect of another exemplary embodiment, there is provided an electronic apparatus including: a communication unit that is configured to communicate with an external device according to a predetermined communication specification; a microphone that is configured to receive an acoustic sound output through a speaker provided with the external device depending on a predetermined event; and a controller that is configured to transmit a response signal to the external device based on connection information of the external device contained in the acoustic sound, and to control the communication unit to automatically connect the electronic apparatus with the external device according to the predetermined communication specification.

The predetermined event may include an event that a power of the electronic apparatus is turned on.

The predetermined communication specification may include at least one of a WiFi specification and a Bluetooth specification.

According to an aspect of another exemplary embodiment, there is provided a control method including: generating an acoustic sound to connect an electronic apparatus with an external device when a predetermined event occurs; outputting the generated acoustic sound; and , automatically connecting the electronic apparatus with the external device according to a predetermined communication specification.

The predetermined event may include an event that a power of the electronic apparatus is turned on.

The generating the acoustic sound may include adding to the acoustic sound information required to connect the electronic apparatus with the external device according to the predetermined communication specification.

The predetermined communication specification may include at least one of a WiFi specification and a Bluetooth specification.

If the predetermined communication specification is the WiFi specification, the information required to connect the electronic apparatus with the external device may include at least one of channel information, access point (AP) information, WiFi-direct information, and a password, and if the predetermined communication specification is the Bluetooth specification, the information required to connect the electronic apparatus with the external device may include at least one of address information, pin information, and key information.

The acoustic sound may include a sound of an audible frequency band or a sub-audible frequency band.

According to an aspect of another exemplary embodiment, there is provided a control method of an electronic apparatus, the control method including: receiving an acoustic sound that is output through a speaker of an external device according to a predetermined event; transmitting a response signal to the external device based on connection information of the external device contained in the acoustic sound; and automatically connecting the electronic apparatus with the external device according to a predetermined communication specification.

The predetermined event may include an event that a power of the electronic apparatus is turned on.

The predetermined communication specification may include at least one of a WiFi specification and a Bluetooth specification.

Since, according to the above described exemplary embodiments, devices are connected by using a sound, users' convenience is improved.

### BRIEF DESCRIPTION OF THE DRAWINGS

The above and/or other aspects will become apparent and more readily appreciated from the following description of exemplary embodiments, with reference to the accompanying drawings, in which:

FIG. 1 is a schematic diagram illustrating a configuration of a wireless communication system according to an exemplary embodiment;

FIG. 2A is a block diagram illustrating a configuration of an electronic apparatus according to an exemplary embodiment;

FIG. 2B is a block diagram illustrating a configuration of an electronic apparatus according to another exemplary embodiment.

FIG. 3 is a block diagram illustrating a detailed configuration of a sound output module according to an exemplary embodiment;

FIG. 4 is a block diagram illustrating a detailed configuration of an electronic apparatus according to an exemplary embodiment;

FIG. 5 is a block diagram illustrating a wireless connection method according to an exemplary embodiment;

FIG. 6 is a block diagram illustrating a wireless connection method according to another exemplary embodiment;

FIG. 7 is a flowchart of a control method of an electronic apparatus according to an exemplary embodiment; and

FIG. 8 is a flowchart of a control method of an electronic apparatus according to another exemplary embodiment.

### DETAILED DESCRIPTION OF EXEMPLARY EMBODIMENTS

Exemplary embodiments will now be described in more detail with reference to the accompanying drawings, in which exemplary embodiments are shown and in which like reference numerals refer to the same elements when they are depicted in different drawings.

The exemplary embodiments are provided to assist in a comprehensive understanding of exemplary embodiments of the present general inventive concept. Also, well-known functions or constructions are omitted to provide a clear and concise description of the exemplary embodiments. Further, dimensions of various elements in the accompanying drawings may be arbitrarily increased or decreased for assisting in a comprehensive understanding.

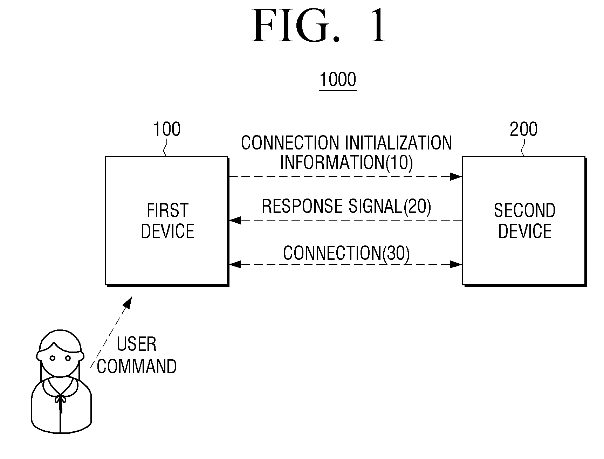

FIG. 1 is a schematic diagram illustrating a configuration of a wireless communication system according to an exemplary embodiment.

A first device 100 transmits connection initialization information 10 for wireless communication with a second device 200 depending on a user command. The first device 100 may transmit the connection initialization information 10 through an acoustic sound by using a speaker of the first device 100. The connection initialization information 10 is digital information necessary for initializing wireless communication with the second device 200, and may include device identification information and other necessary information according to corresponding communication specifications. For example, in a case of the Bluetooth specification, the connection initialization information 10 may include address information, pin information, key information, etc..

The second device 200 may receive the acoustic sound from the first device 100 through a microphone of the second device 200, and may generate a response signal based on the connection initialization information 10 contained within the received acoustic sound. The second device 200 may transmit a response signal 20 to the first device 100 in response to the connection initialization information 10.. The response signal 20 can be transmitted through a wireless communication channel, and may include device identification information of the second device 200. The wireless communication channel may be a channel according to the wireless communication specification, e.g., a WiFi specification, a Bluetooth specification, etc.

Accordingly, the first device 100 and the second device 200 may be connected through the corresponding wireless communication channel.

A microphone may be added to the first device 100 and a speaker may be added to the second device 200 and the above-described response signal may also be transmitted as an acoustic signal.

Configurations and operations of the first device 100 and second device 200 will now be explained .

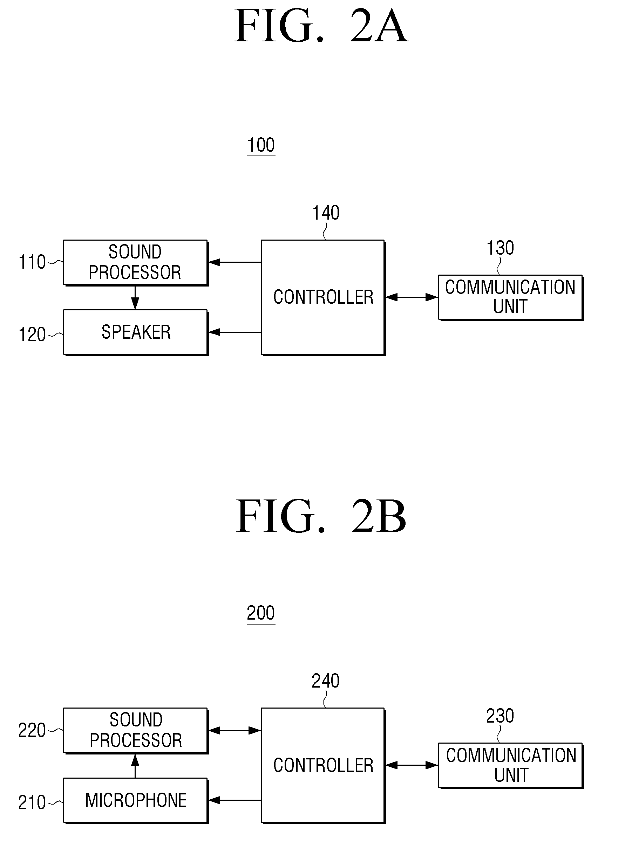

FIG. 2A is a block diagram illustrating a configuration of an electronic apparatus according to an exemplary embodiment. FIG. 2B is a block diagram illustrating a configuration of another electronic apparatus according to an exemplary embodiment.

An electronic apparatus 100 as illustrated in FIG. 2A may be implemented as the first device 100 as illustrated in FIG. 1, and an electronic apparatus 200 as illustrated in FIG. 2B may be implemented as the second device 200 as illustrated in FIG. 1.

Referring to FIG. 2A, the electronic apparatus 100 includes a sound processor 110, a speaker 120, a communication unit 130, and a controller 140.

When a predetermined event occurs, the sound processor 110 generates an acoustic sound to connect the electronic apparatus 100 with peripheral devices. The acoustic sound refers to a mechanical wave that propagates through a medium of an elastic member.

When a predetermined event to connect the electronic apparatus 100 with peripheral devices occurs, the sound processor 110 may generate an acoustic sound including information necessary to connect the electronic apparatus 100 with the peripheral device. The predetermined event may be, but is not limited to, an event that the power of the electronic apparatus 100 is turned on.

The sound processor 110 may mix a basic sound with connection information, thereby creating the acoustic sound. The basic sound may be a music sound, or a sound of a specific frequency band.

The sound processor 110 may generate the acoustic sound including information necessary f to connect the electronic apparatus 100 with the peripheral devices according to the predetermined communication specification. For example, if the predetermined communication specification is the WiFi specification, the sound processor 110 may generate the acoustic sound including channel information, access point (AP) information (for example, in an AD-hoc mode), WiFi-direct information, a password, etc. Alternatively, if the predetermined communication specification is the Bluetooth specification, the sound processor 110 may generate the acoustic sound including address information, pin information, key information, etc.

The speaker 120 outputs the acoustic sound generated by the sound processor 110. The output acoustic sound may be a sound of an audible frequency band or a sub-audible frequency band.

The communication unit 130 communicates with the external devices according to the predetermined communication specification.

For example, the communication unit 130 has a Wi-Fi communication chip and a Bluetooth communication chip, and can communicate according to the WiFi specification or the Bluetooth specification by using the corresponding communication module. In addition, the communication unit 130 may communicate according to a variety of communication specifications such as IEEE, ZigBee, third generation (3G), third generation partnership project (3GPP), long term evolution (LTE), near field communication (NFC), etc.

The controller 140 controls overall operations of the electronic apparatus 100.

Particularly, the controller 140 may control the communication unit 130 to automatically connect the electronic apparatus 100 with the external device (for example, an electronic apparatus 200 as illustrated in FIG. 2B) that receives the acoustic sound output from the speaker 120.

After a response signal is received from the external device that received the output acoustic sound, the controller 140 may connect the electronic apparatus 100 with the electronic apparatus 200 according to the corresponding wireless communication specification.

On the other hand, the controller 140 may generate and output an acoustic sound for a locality check before outputting the acoustic sound to connect the electronic apparatus 100 with the electronic apparatus 200. If it is determined from the result of the locality check that there is a peripheral device, the controller 140 may output the acoustic sound to connect the electronic apparatus 100 with the determined peripheral device using a wireless communication.

Referring to FIG. 2B, the electronic apparatus 200 includes a microphone 210, a sound processor 220, a communication unit 230, and a controller 240.

The microphone 210 receives the acoustic sound that is output through the speaker 120 of the external device, for example, the electronic apparatus 100 as illustrated in FIG. 2A. The acoustic sound may be transmitted through the audible frequency band or the sub-audible frequency band.

The sound processor 220 processes the acoustic sound received through the microphone 210 so as to decode connection information contained within the acoustic sound.

The sound processor 220 may convert the acoustic sound of the received analog signal into a digital signal and may perform digital processing. For example, the sound processor 220 may detect a synchronizing signal and may perform channel equalization, noise reduction, and decoding operation.

The sound processor 220 determines whether the decoded information matches with previously stored information. If the decoded information matches with the previously stored information, the sound processor 220 generates a response signal based on identification information of the external device contained within the decoded information and sends it to the external device. As a result, a communication connection between the external device and the electronic apparatus 200 may be established. The response signal may include the identification information of the electronic apparatus 200 and additional information required to establish the connection. For a connection according to the WiFi specification, the response signal may include AP information and WiFi-direct information in addition to the identification information of the electronic apparatus 200. The communication unit 230 communicates with the external device according to the predetermined communication specification.

The communication unit 230 has a Wi-Fi communication chip and a Bluetooth communication chip, and is thereby configured to communicate according to the WiFi standard or the Bluetooth standard by using the corresponding communication chip.

The controller 240 controls overall operation of the electronic apparatus 200.

The controller 240 may control the communication unit 230 to automatically connect with the external device based on the connection information of the external device contained within the acoustic sound received through the microphone 210.

The controller 240 sends a response signal to the corresponding external device based on the connection information of the external device and performs pairing according to the wireless communication specification contained within the connection information.

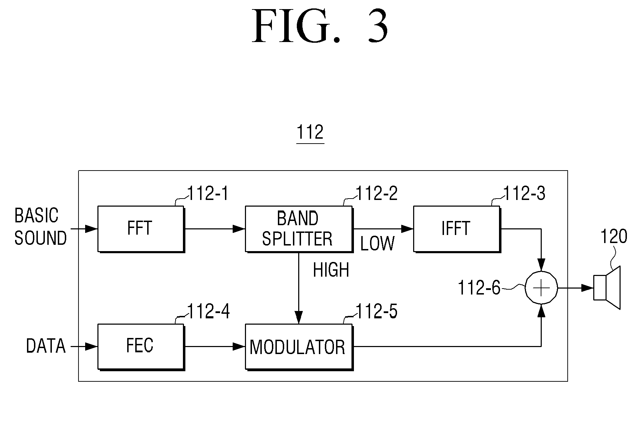

FIG. 3 is a block diagram illustrating a detailed configuration of a sound output module according to an exemplary embodiment.

Referring to FIG. 3, a sound output module 112 includes an FFT unit 112-1, a band splitter 112-2, an IFFT unit 112-3, an FEC unit 112-4, a modulator 112-5, and a mixer 112-6. The FFT unit 112-1 performs fast Fourier transformation (FFT) with respect to an audio signal such as a music sound, a specific band sound, etc. The band splitter 112-2 divides the fast Fourier transformed audio signal into high frequency components and low frequency components. The low frequency components are sent to the IFFT unit 112-3, and the high frequency components are sent to the modulator 112-5. The IFFT unit 112-3 performs inverse fast Fourier transformation (IFFT) with respect to the audio signal of which the high frequency components have been removed.

The FEC unit 112-4 converts the input digital data into forward error correction codes and outputs the forward error correction codes. The modulator 112-5 modulates the encoded digital data depending on the high frequency components. The modulator 112-5 may perform orthogonal frequency division multiplexing modulate. The sound signal processed in the modulator 112-5 has a spectral envelope with a shape similar to the high frequency components. The audio signals processed in the IFFT unit 112-3 and the sound signals processed in the modulator 112-5 are mixed through the mixer 112-6, thereby generating an acoustic sound. The generated acoustic sound is output through the speaker 120.

The acoustic sound generating method as not limited to the operations described above and the acoustic sound may be generated by a variety of other methods.

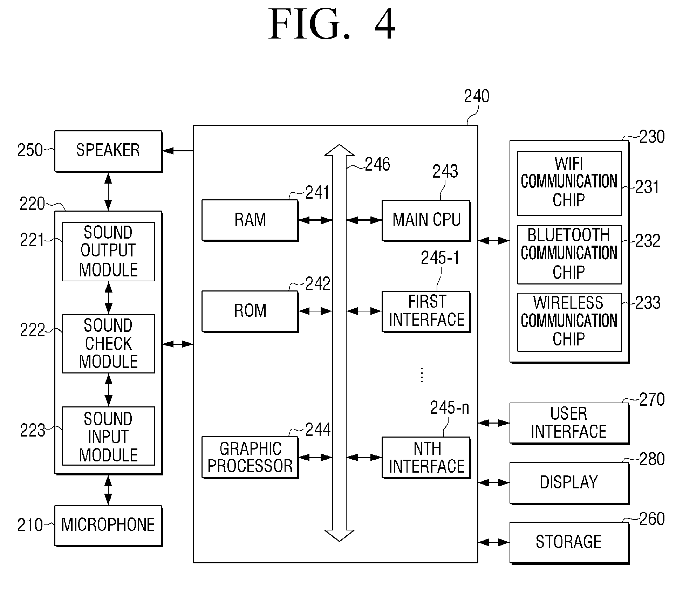

FIG. 4 is a block diagram illustrating a detailed configuration of an electronic apparatus according to an exemplary embodiment. In the description of FIG. 4, explanations of components overlapping with the explanations of components as illustrated in FIG. 2 will be omitted.

FIG. 4 illustrates an electronic apparatus 200 as illustrated in FIG. 2B which can also perform the operations of the electronic apparatus 100 as illustrated in FIG. 2A. However, the configuration of the electronic apparatus 200 (or electronic apparatus 100) is not limited to the configuration as illustrated in FIG. 4. Accordingly, in the exemplary embodiment, some of the components, as illustrated in FIG. 4, may be omitted or changed, and other components may be added in to the configuration as shown in FIG. 4.

The microphone 210 receives the acoustic sound that is output through the external device. The acoustic sound may include information required to establish a connection between the external device and the electronic apparatus 200.

The sound processor 220 includes a sound input module 223, a sound output module 221, and a sound check module 222.

The sound input module 223 separates an encoded analog sound signal from the acoustic sound that is input from the microphone 210. The sound input module 223 converts the separated encoded analog sound signal into an encoded digital signal and sends the converted digital signal to the sound check module 222. The sound check module 222 receives and decodes the encoded digital signal, thereby checking information required to establish the connection. As described above, the sound processing unit 220 may be implemented as a part of the controller 240.

The sound check module 222 receives and decrypts data required to establish the connection which is sent by the external device, or encrypts and generates data required to establish a connection with the external device. The sound check module 222 generates a response signal with respect to the received signals, and sends it to the sound output module 221. The response signal may include specific information about the electronic apparatus 200 (for example, ID, ESN, serial numbers, addresses, etc.).

The sound output module 221 converts the encoded data generated in the sound check module 222 into an analog sound signal. The sound output module 221 outputs the acoustic sound mixed with the basic sound of a specific frequency band through the speaker 250. The basic sound may include a music sound, a sound of a specific audible frequency band, or a sound of a sub-audible frequency band.

The above-described sound processor 220 may be implemented by software components or hardware components. For example, the sound processor 220 may be implemented as a program that is executed by the controller 240.

The communication unit 230 is configured to perform communication with various types of external devices according to various types of communication specifications.

The communication unit 230 communicates with the external device according to the predetermined communication specification based on the acoustic sound that was processed through the sound processor 220. Accordingly, the communication unit 230 includes a variety of communication chips such as a WiFi communication chip 231, a Bluetooth communication chip 232, a wireless communication chip 233, etc.

The WiFi communication chip 231 and the Bluetooth communication chip 232 communicate according to the WiFi specification and the Bluetooth specification, respectively. The wireless communication chip 233 refers to a chip that can communicate according to at least one of a variety of communication specifications such as IEEE, ZigBee, third generation (3G), third generation partnership project (3GPP), long term evolution (LTE), etc. In addition, the communication unit 230 may include a NFC chip that operates in a near field communication (NFC) way using 13.56 MHz band among a variety of RF-ID frequency bands such as 135 kHz, 13.56 MHz, 433 MHz, 860-960 MHz, 2.45 GHz, etc.

On the other hand, the operation of the above-described controller 240 may be performed by the program that is stored in the storage 260. The storage 260 may store an operating system software to operate the electronic apparatus 200, a variety of applications, various data that are input or set during execution of the applications, and various content, etc.

The storage 260 may store base instructions (not illustrated) of a basic processor that processes signals transmitted from each hardware component included in the electronic apparatus 100 and which sends the signals to a upper layer, a communication interface (not illustrated) for performing a variety of communications, etc.

The storage 260 may store information related to communication connection with the external device, for example, existing pairing information, etc.

The speaker 250 may output not only a variety of audio data processed in the electronic apparatus 200 but also various kinds of notification sounds, etc.

Particularly, when the electronic apparatus 200 performs the function of the electronic apparatus 100 as illustrated in FIG. 2A, the speaker 250 may output the acoustic sound including data required to establish connection with the external device.

The user interface 270 receives a variety of user commands.

The user interface 270 may receive a user command to turn on the power of the electronic apparatus 200. The user interface 270 may be implemented as a remote controller signal receiver, as various types of buttons such as mechanical buttons, a touch pad, a wheel, etc., formed on any area of a front portion, a side portion, or a rear portion of a main body appearance, etc. The user interface 270 may receive a remote controller signal corresponding to a user command to turn on/off the power of the electronic apparatus 200.

The electronic apparatus 200 may further include a display (not illustrated), an audio processor (not illustrated), a video processor (not illustrated), a camera (not illustrated), etc.

The display (not illustrated) displays a variety of screens. The screens may include an application running screen including a variety of objects such as images, videos, texts, a graphic user interface (GUI) screen, etc.

The audio processor (not illustrated) is a component to perform a process with respect to the audio data. The audio processor (not illustrated) may perform a variety of processing with respect to the audio data, such as decoding, amplifying, noise filtering, etc.,.

The video processor (not illustrated) is a component to perform a process with respect to video data. The video processor (not illustrated) may perform a variety of image processing with respect to the video data, such as decoding, scaling, noise filtering, frame rate changing, resolution changing, etc.,.

When a camera (not illustrated) is provided, the electronic apparatus 200 may operate in a motion control mode in which it performs control operations depending on the user's motion that is recognized by the camera (not illustrated).

On the other hand, the controller 240 controls the overall operation of the electronic apparatus 200 by using various programs stored in the storage 260.

The controller 240 may execute the application stored in the storage 260, may display an execution screen and may play various contents stored in the storage 260. The controller 240 may communicate with the external devices through the communication unit 230.

The controller 240 includes a random access memory (RAM) 241, a read only memory (ROM) 242, a main central process unit (CPU) 243, a graphic processor 244, first to nth interfaces 245-1 to 245-n, and a bus 246.

The RAM 241, ROM 242, main CPU 243, graphic processor 244, and first to nth interfaces 245-1 to 245-n may be connected to each other through the bus 246.

The first to nth interfaces 245-1 to 245-n are connected to various components as described above. One of the interfaces may be a network interface that is connected to the external device through the network.

The main CPU 243 accesses to the storage 260 and performs booting by using the operating system stored in the storage 260. The main CPU 243 performs various operations by using various programs, contents, data, etc. stored in the storage 260.

Command sets for the system booting, etc. are stored in the ROM 242. If the turn on command is input and the power is supplied, the main CPU 243 copies the operating system stored in the storage 260 to the RAM 241 according to the instructions stored in the ROM 242 and executes the operating system, thereby booting the system. After the booting is completed, the main CPU 243 copies the variety of application programs stored in the storage 260 to the RAM 241 and executes the application programs copied to the RAM 241, thereby performing a variety of operations.

The graphic processor 244 creates a screen including a variety of objects such as icons, images, texts, etc. by using a calculator (not illustrated) and a rendering unit (not illustrated). The calculator computes property values such as a coordinate value, a shape, a size, a color, etc. for each of objects that will be displayed according to the layout of the screen by using control commands received from the user interface 270. The rendering unit creates various layouts of the screen that contains the objects based on the property values computed by the calculator. The screen created by the rendering unit is displayed inside a display area of the display (not illustrated).

The controller 240 may generate and output an acoustic sound for a locality check before outputting an acoustic sound for pairing. If it is determined from the result of the locality check that there is a peripheral device, the controller 240 may output an acoustic sound to establish a wireless connection with the determined peripheral device.

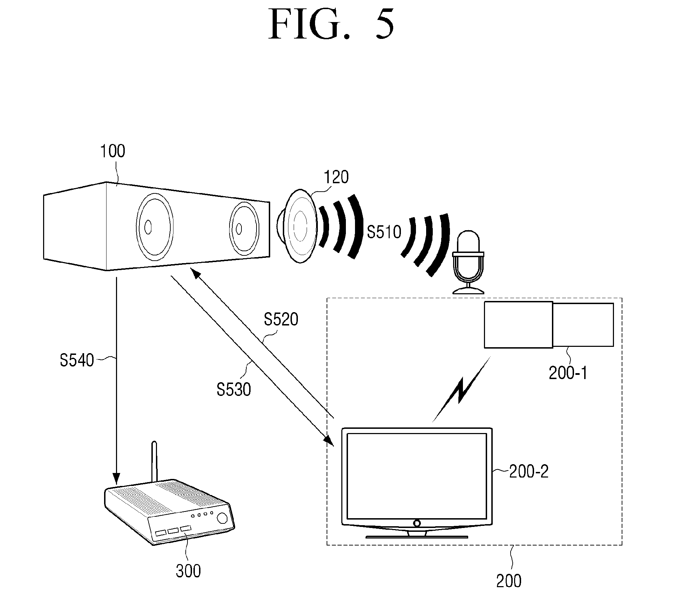

FIG. 5 is a block diagram illustrating a wireless connection method according to an exemplary embodiment.

A WiFi connection method according to an exemplary embodiment will be described with reference to FIG. 5.

As illustrated in FIG. 5, when a predetermined event (for example, power on) occurs in a first device 100, a WiFi communication chip contained within the first device 100 operates in a Soft AP/Ad-Hoc mode. Then, a speaker unit 120 emits an acoustic sound including digital information required for WiFi connection (S51 0). The acoustic sound may be emitted in audible/sub-audible frequency bands, and may include information related to the WiFi connection, such as Ch#/SSID/BSSID/password of the Soft AP/Ad-Hoc mode. The SSID defines a service set identifier, and is used to distinguish each wireless LAN from another wireless LAN when a WiFi client connects to a basic service set (BSS). The BSSID defines a basic service set identifier, and contains an address of a wireless adaptor or of an access point.

A microphone 210 which is provided with a second device 200 receives the acoustic sound. The second device 200 extracts digital information required for the WiFi connection from the acoustic sound and establishes the WiFi connection with the first device 100 based on the extracted digital information. If the second device 200 is implemented as a digital TV 200-2 as illustrated in FIG. 5, the microphone 210 may be implemented as a microphone built in a smart remote controller 200-1 to communicate with the digital TV 200-2, a microphone built-in a video communication camera provided with the digital TV 200-2, etc. If the microphone 210 is implemented as the microphone built in the smart remote controller 200-1, the acoustic sound received through the microphone 210 may be transmitted to the TV between the smart remote controller 200-1 and the TV 200-2 according to the predetermined communication specification.

The second device 200 transmits information about the WiFi (namely, home access point (AP)) to which it has been connected and information related to its WiFi-direct GO to the first device 100. The second device 200 may transmit information about the Ch#/SSID/password/GO internet value (priority within a group), etc. at application level (S520). The WiFi-direct means to directly communicate between devices with WiFi without going through a WiFi-direct AP that supports connection between WiFi devices.

The first device 100 sets up its WiFi by using the information received from the second device 200 so that it can directly connect to the home AP 300 or the second device 200 (S530 and S540).

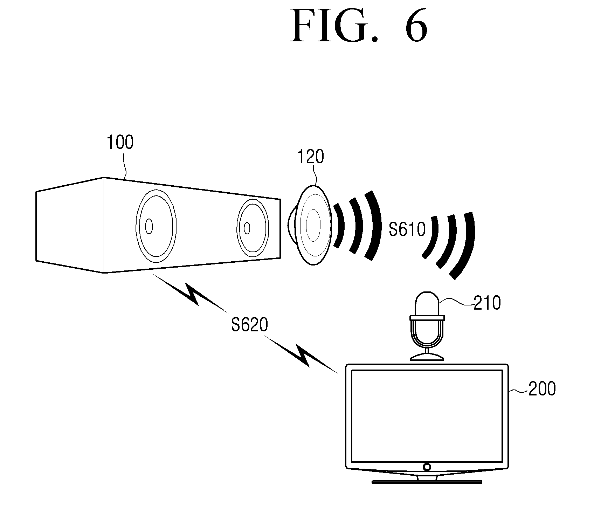

FIG. 6 is a block diagram illustrating a wireless connection method according to another exemplary embodiment.

A Bluetooth connection method according to another exemplary embodiment will be described with reference to FIG. 6.

As illustrated in FIG. 6, when a predetermined event (for example, power on) occurs in a first device 100, the first device 100 operates in a connectable and unscanable mode.

The first device 100 may continuously emit information required to establish a connection with the second device 200 through the speaker 120 in the audible/sub-audible frequency bands (S61 0). The digital information required for the connection with the second device 200 may include address information, PIN information, key information, etc. For example, the digital information may include BD Address, PIN (2.0), and Passkey (2.1), etc.

The second device 200 extracts the digital information from the acoustic sound received through the microphone 210 and performs Bluetooth pairing with the first device 100 based on the extracted digital information (S620).

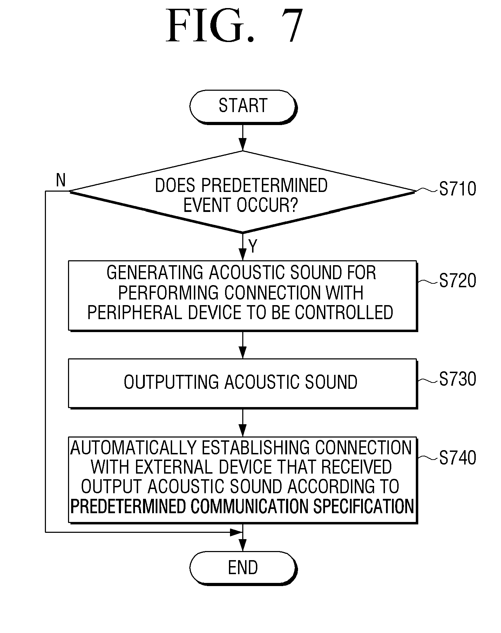

FIG. 7 is a flowchart f of a control method of an electronic apparatus according to an exemplary embodiment. The control method of an electronic apparatus as illustrated in FIG. 7 may be implemented as a control method for the electronic apparatus 100 as illustrated in FIG. 2A.

According to the control method of the electronic apparatus 100 as illustrated in FIG. 7, when a predetermined event occurs (S710:Y), the electronic apparatus 100 generates an acoustic sound to establish a connection with a peripheral device (S720). The acoustic sound may include information required to establish the connection with the peripheral device according to a predetermined communication specification. If the predetermined communication specification is the WiFi specification, the electronic apparatus 100 may create an acoustic sound including channel information, AP information, Ad hoc information, password, etc. Alternatively, if the predetermined communication specification is the Bluetooth specification, the electronic apparatus 100 may create an acoustic sound including address information, pin information, key information, etc.

Also, the predetermined event for generating the acoustic sound that occurs in the operation of S710 may be an event that the power of the electronic apparatus 100 is turned on.

Then, the electronic apparatus 100 outputs the acoustic sound generated in operation S720 (S730). The acoustic sound may be output through a speaker provided with the electronic apparatus 100. The acoustic sound may be output as a sound of an audible frequency band or a sub-audible frequency band.

Thereafter, a response signal is received from the external device that received the acoustic sound output in operation S730, the electronic apparatus 100 automatically establishes a connection with the external device according to the predetermined communication specification (S740).

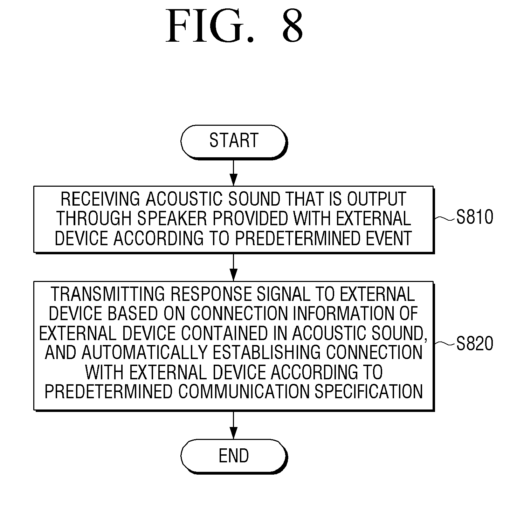

FIG. 8 is a flowchart of a control method of an electronic apparatus according to another exemplary embodiment. The control method of an electronic apparatus as illustrated in FIG. 8 may be implemented as a control method for the electronic apparatus 200 as illustrated in FIG. 2B.

According to the control method of the electronic apparatus 200 as illustrated in FIG. 8, the electronic apparatus 200 receives the acoustic sound that was output through the speaker provided with the external device according to the predetermined event (S810). The predetermined event may be an event that the power of the external device is turned on.

Then, the electronic apparatus 200 transmits a response signal to the external device based on the connection information of the external device contained in the acoustic sound, and automatically establishes a connection with the external device according to the predetermined communication specification (S820). The predetermined communication specification may include at least one of a WiFi specification and a Bluetooth specification. The response signal may include identification information of the electronic apparatus 200 and additional information. When a WiFi connection is established, the response signal may include information of an access point (AP) to which the electronic apparatus 200 has been connected, information of its WiFi-direct, etc.

Accordingly, a connection between the devices may be established easily.

The methods according to the various exemplary embodiments as described above may be implemented by software, and thus, may be loaded on the electronic apparatus.

The electronic apparatus may include a non-transitory computer-readable medium on which a program according to an exemplary embodiment is stored that performs an operation of generating an acoustic sound to establish a connection with a peripheral device when a predetermined event occurs, an operation of outputting the generated acoustic sound, and an operation of automatically establishing a connection with the external device according to the predetermined communication specification if a response signal is received from the external device that received the output acoustic sound..

Alternatively, the electronic apparatus may include a non-transitory computer-readable medium on which a program according to another exemplary embodiment is stored that performs an operation of receiving the acoustic sound that is output through a speaker provided with the external device according to the predetermined event, and an operation of transmitting a response signal to the external device based on the connection information of the external device contained in the acoustic sound and automatically establishing a connection with the external device according to the predetermined communication specification.

Contrary to a medium to store data for a short moment like a register, a cache, a memory, the non-transitory computer-readable medium is a medium that can store data in a semi-permanent manner and that can be read by devices not, etc., . The various applications or programs as described above may be stored in the non-transitory computer readable medium, such as a CD, a DVD, a hard disc, a Blu-ray disc, an USB, a memory card, a ROM, etc. Also, the applications or programs may be downloaded through a network such as the internet, etc.

The foregoing exemplary embodiments and advantages are merely exemplary and are not to be construed as limiting the present inventive concept. The description of the exemplary embodiments is intended to be illustrative, and not to limit the scope of the claims, an many alternatives, modifications, and variations will be apparent to those skilled in the art.

## Claims

1. An electronic apparatus comprising:
a communication unit that performs communication with an external device according to a predetermined communication specification;
a sound processor that generates an acoustic sound for performing connection with the external device when a predetermined event occurs;
a speaker that outputs the acoustic sound; and
a controller that controls the communication unit to automatically connect the electronic apparatus with the external device according to the predetermined communication specification when a response signal is received from the external device that received the acoustic sound output from the speaker.

2. The electronic apparatus of claim 1, wherein
the predetermined event comprises an event that a power of the electronic apparatus is turned on.

3. The electronic apparatus of claim 1 or claim 2, wherein
the sound processor generates the acoustic sound including information required for performing connection with the external device according to the predetermined communication specification.

4. The electronic apparatus of claim 3, wherein
the predetermined communication specification comprises at least one of a WiFi specification and a Bluetooth specification.

5. The electronic apparatus of claim 4, wherein
if the predetermined communication specification is the WiFi specification, the information required for performing connection with the external device comprises at least one of channel information, access point (AP) information, WiFi-direct information, and a password, and
if the predetermined communication specification is the Bluetooth specification, the information required for performing connection with the external device comprises at least one of address information, pin information, and key information.

6. The electronic apparatus of anyone of claims 1 to 5, wherein
the acoustic sound comprises a sound of an audible frequency band or a subaudible frequency band.

7. An electronic apparatus comprising:
a communication unit that performs communication with an external device according to a predetermined communication specification;
a microphone that receives an acoustic sound output through a speaker of the external device depending on a predetermined event; and
a controller that transmits a response signal to the external device based on connection information of the external device contained in the acoustic sound, and controls the communication unit to automatically perform connection with the external device according to the predetermined communication specification.

8. The electronic apparatus of claim 7, wherein
the predetermined event comprises an event that a power of the electronic apparatus is turned on.

9. The electronic apparatus of claim 7 or claim 8, wherein
the predetermined communication specification comprises at least one of a WiFi specification and a Bluetooth specification.

10. A control method comprising:
generating an acoustic sound for performing connection with an external device when a predetermined event occurs;
outputting the generated acoustic sound; and
automatically connecting the electronic apparatus with the external device according to a predetermined communication specification when a response signal is received from the external device that received the output acoustic sound.

11. The control method of claim 10, wherein
the predetermined event comprises an event that a power of the electronic apparatus is turned on.

12. The control method of claim 10 or claim 11, wherein
the generating the acoustic sound comprises adding to the acoustic sound information required for performing connection with the external device according to the predetermined communication specification.

13. The control method of claim 12, wherein
the predetermined communication specification comprises at least one of a WiFi specification and a Bluetooth specification.

14. The control method of claim 13, wherein
if the predetermined communication specification is the WiFi specification, the information required for performing connection with the external device comprises at least one of channel information, access point (AP) information, WiFi-direct information, and a password, and
if the predetermined communication specification is the Bluetooth specification, the information required for performing connection with the external device comprises at least one of address information, pin information, and key information.

15. A control method of an electronic apparatus, the control method comprising:
receiving an acoustic sound that is output through a speaker of an external device according to a predetermined event;
transmitting a response signal to the external device based on connection information of the external device contained in the acoustic sound; and
automatically connecting the electronic apparatus with the external device according to a predetermined communication specification.
